# FASCICULE DE BREVET EUROPEEN

(11) **EP 1 877 299 B1**
(45) Date de publication et mention de la délivrance du brevet: **03.06.2009**
(21) Numéro de dépôt: 06743705.3
(22) Date de dépôt: 14.04.2006
(51) Int. Cl.: B62K 19/36, B62J 1/06

(54) **DISPOSITIF DE SUPPORT DE TIGE DE SELLE**
SATTELSTANGENTRÄGERVORRICHTUNG
SADDLE POST SUPPORTING DEVICE

(30) Priorité: 04.05.2005 FR 0504596
(43) Date de publication de la demande: 16.01.2008
(73) Titulaire: Look Cycle International, 58000 Nevers (FR)
(72) Inventeur: JULLIARD, Eric, F-58000 Nevers (FR); ROUDERGUES, Frédéric, F-58000 Nevers (FR)
(74) Mandataire: Loyer
(86) Numéro de dépôt international: PCT/FR2006/000834
(87) Numéro de publication internationale: WO 2006/120311

(56) Documents cités:
- CH-A- 227 485
- DE-A1- 19 630 839
- DE-C- 805 350
- DE-U1- 20 213 890
- FR-A- 2 618 120
- US-A- 6 050 585

## Description

La présente invention concerne un dispositif de support de tige de selle, en particulier pour raccorder une selle de cycle sur un cadre de cycle.

Le raccordement d'une selle sur un cadre de cycle se fait à l'aide d'une tige de selle portant des moyens de fixation de la selle à l'une de ses extrémités, alors que son extrémité opposée est adaptée pour coopérer avec un dispositif de support en étant insérée dans un raccord tubulaire de celui-ci.

Ce raccord peut être constitué directement par l'extrémité haute d'un tube de selle du cadre de cycle ou par un élément tubulaire disposé dans le tube de selle, dans l'intersection de celui-ci et du tube supérieur du cadre de cycle. Le raccord présente une dimension intérieure adaptée à la dimension extérieure de la tige afin de permettre à la tige de glisser à l'intérieur du raccord dans le sens de la hauteur pour permettre le réglage en hauteur de la selle par rapport à l'axe du pédalier pour une adaptation à la taille du cycliste.

Le dispositif de support comporte des moyens de blocage en rotation de la tige de selle, ainsi que des moyens de maintien de la tige de selle dans une position longitudinale déterminée par rapport au raccord tubulaire pour régler la hauteur de la selle. En général, un dispositif de serrage unique fait fonction de moyens de blocage en rotation ainsi que de moyens de maintien de la tige de selle en fixant celle-ci après son insertion dans le raccord sur une certaine longueur qui en général ne doit pas être inférieure à environ 60 mm.

Pour obtenir le serrage de la tige de selle à l'intérieur du raccord, ce dernier est à son extrémité haute en général fendu et le dispositif de serrage peut tout simplement être constitué par un boulon s'étendant transversalement pour rapprocher les deux bords opposés du raccord jusqu'à exercer sur la tige de selle un serrage suffisant par rapport au poids du cycliste, dans toutes les conditions d'utilisation.

Selon une variante très courante, le dispositif de serrage comporte un collier de serrage séparé disposé à l'extrémité haute du raccord fendu.

Un exemple d'un tel collier est illustré dans le DE 295 00 596. Il est également utilisé dans le DE 202 13 890 qui décrit une tige de selle à ressort servant d'amortisseur.

On connaît par ailleurs d'autres dispositifs de support de tige de selle qui permet de régler la hauteur de la selle à l'aide d'un ressort pneumatique à la manière d'une chaise de bureau. Un dispositif selon le préambule de la revendication 1 est connu du DE 196 30 839 qui décrit une tige de selle en deux parties dont une partie supérieure est montée coulissante dans une partie inférieure qui enferme un ressort pneumatique apte à pousser la partie supérieure vers le haut pour régler la hauteur de la selle. La longueur d'insertion de la partie inférieure de la tige de selle est réglable à l'aide de moyens de serrage classiques comme ceux mentionnés ci-dessus.

Encore un autre dispositif de support de tige de selle est décrit dans US 6 050 585 dans lequel la hauteur de la selle est réglée à l'aide d'une tige de selle comprenant une vis motorisée en prise avec un écrou fixé à l'intérieur du tube de selle. Un dispositif similaire, mais avec un ressort à la place de l'ensemble vis-écrou, est décrit dans le FR 2 618 120.

Encore un autre dispositif de support de tige de selle est décrit dans le GB 219 877 dans lequel la hauteur de la selle est réglée à l'aide d'une tige de selle filetée et des bagues crantées enfilées sur la tige de selle afin de la bloquer en rotation.

Encore un autre type de dispositif de support de tige de selle est décrit dans les documents DE 805 350, US 2004/129471 et US 6 478 278 selon lesquels la hauteur de la selle est réglée en bloquant la tige de selle dans des positions différentes à l'aide de pièces transversales s'étendant dans des trous traversants effectués dans la paroi du tube de selle.

Un dispositif de support de tige de selle d'un autre type est décrit dans le CH 227 485 qui comporte des moyens de réglage en hauteur de la selle en bloquant la tige de selle dans des positions différentes à l'aide de cliquets coopérant avec une crémaillère à l'intérieur du tube de selle ou bien avec des trous prévus sur la tige de selle.

Tous ces supports de tige de selle connus sont plus ou moins compliqués à mettre en oeuvre et présentent un coût de fabrication relativement élevé.

En outre, même si ce principe de serrage de la tige de selle permet un réglage en hauteur important, il entraîne un poids non négligeable de l'ensemble dispositif de support / tige de selle du fait qu'à la longueur minimale d'insertion de la tige d'environ 60 mm, il faut ajouter la longueur de tige nécessaire au réglage de la hauteur de la selle par rapport à l'axe du pédalier.

Un autre inconvénient est apparu avec l'évolution des cadres de cycle qui comportent souvent un tube supérieur qui n'est plus horizontal, mais incliné vers l'arrière, ce qui a tendance à allonger davantage la partie libre de la tige de selle, cette dernière devant rester à la même hauteur. Cela augmente les contraintes au niveau de l'encastrement de la tige de selle dans le raccord, le bras de levier devenant plus important.

Ainsi, pour résister à ces efforts, le dimensionnement du raccord et de la tige de selle doit être renforcé, ce qui entraîne une augmentation supplémentaire du poids de ces éléments.

Un autre problème vient du fait que pour supprimer tout glissement de la tige de selle à l'intérieur du tube de selle, sous l'effet notamment du poids du cycliste, il est nécessaire de prévoir un effort de serrage relativement important, alors que les épaisseurs de ces tubes sont minces et que le coefficient de frottement est parfois très bas, comme par exemple dans le cas de tubes de cadre en matériau composite.

Le but de l'invention est de remédier aux inconvénients des supports de tige de selle antérieurement connus en proposant un dispositif de support de tige de selle assurant une butée positive pour la tige de selle en remplaçant la liaison par friction traditionnelle par une liaison par obstacle différente des moyens connus dans l'état de la technique, tout en permettant le réglage de la longueur d'insertion de la tige de selle dans le raccord de selle d'une manière extrêmement simple et fiable.

Le dispositif de support de tige de selle selon l'invention supprime en outre efficacement selon un autre aspect de l'invention tout glissement de la tige de selle et est en plus apte à offrir un effet d'amortissement. On obtient en même temps un rattrapage du jeu radial du bas de la tige de selle à l'intérieur du raccord de manière à éviter tout flottement de la tige de selle qui autrement peut être désagréable et même gênant pour le cycliste.

L'objet de l'invention est un dispositif de support de tige de selle, comprenant un raccord tubulaire faisant partie d'un cadre de cycle et apte à recevoir une tige de selle, des moyens de blocage en rotation de ladite tige de selle, et des moyens de maintien de la tige de selle dans une position longitudinale déterminée par rapport audit raccord tubulaire, lesdits moyens de maintien comportant une surface de butée prévue sur ladite tige de selle et apte à coopérer avec une butée prévue sur ledit raccord de manière à délimiter la longueur d'insertion de la tige de selle dans celui-ci, caractérisé par le fait que lesdits moyens de maintien comportent en outre au moins une entretoise annulaire apte à être disposée entre ladite surface de butée et ladite butée de manière à permettre le réglage de ladite longueur d'insertion.

Selon d'autres caractéristiques de l'invention :
- plusieurs entretoises sont disposées les unes contre les autres de manière à former un empilage ;
- la longueur des entretoises varie d'une entretoise à une autre ;
- ladite au moins une entretoise est en un matériau élastique ;
- ladite tige de selle comporte un moyen auxiliaire de liaison permettant de relier ladite au moins une entretoise à ladite tige de selle pour former un ensemble préassemblé avant le montage de la tige de selle sur ledit raccord;
- ladite butée est formée par un épaulement sur la paroi intérieure dudit raccord, que ladite surface de butée est constituée par la face d'extrémité de ladite tige de selle, et ladite au moins une entretoise annulaire est disposée à l'intérieur dudit raccord, entre ledit épaulement et ladite face d'extrémité dudit raccord ;
- ledit moyen auxiliaire de liaison comporte une douille dont l'une des extrémités est dimensionnée pour être introduite dans la tige de selle et dont l'autre extrémité est pourvue d'une collerette dimensionnée pour être introduite dans ledit raccord de sorte que sa face inférieure repose sur ladite butée, alors que sa face supérieure constitue une surface d'appui pour une entretoise enfilée sur ladite douille ;
- ladite douille comporte plusieurs fentes longitudinales s'étendant vers le bas à partir de son extrémité haute de manière à apporter une certaine flexibilité transversale à cette extrémité haute ;
- ladite douille présente à sa partie haute une dimension extérieure légèrement supérieure à la dimension intérieure de la tige de selle de sorte que la douille soit retenue par friction à l'intérieur de celle-ci ;
- ladite partie haute de la douille comporte sur sa périphérie extérieure une série de rainures annulaires ;
- ladite douille est en un matériau élastique ;
- un anneau en matériau élastique est inséré entre ladite butée et l'extrémité basse de la tige de selle ;
- la face supérieure dudit anneau est conique pour coopérer par complémentarité des formes avec une surface inférieure conique de l'extrémité basse de la tige de selle ;
- l'extrémité basse de la tige de selle est biseautée afin de venir en appui sur la surface supérieure d'une entretoise biseautée de manière complémentaire;
- ladite butée est constituée par la face d'extrémité dudit raccord, ladite surface de butée est formée par un épaulement supérieur annulaire sur la périphérie de ladite tige de selle, et ladite au moins une entretoise annulaire est enfilée sur ladite tige de selle, en dessous dudit épaulement supérieur ;
- ledit moyen auxiliaire de liaison de ladite au moins une entretoise à ladite tige de selle comporte des nervures prévues sur l'une ou l'autre des interfaces entre ladite au moins une entretoise et ladite tige de selle ;
- ledit moyen auxiliaire de liaison de ladite au moins une entretoise à ladite tige de selle comporte un anneau en matériau élastique enfilé sur ladite tige de selle en dessous de ladite entretoise de manière à retenir celle-ci en place sur ladite tige de selle ;
- les surfaces périphériques dudit raccord, de ladite au moins une entretoise, et de ladite tige de selle au-dessus dudit épaulement, sont alignées lorsque cette dernière est insérée dans ledit raccord ;
- le dispositif comporte en outre des moyens de retenue de ladite tige de selle à l'intérieur dudit raccord, ces moyens de retenue étant intégrés dans ladite tige de selle;
- lesdits moyens de retenue comportent une bague d'expansion en un matériau élastique enfilée sur ladite tige de selle en appui contre un épaulement annulaire inférieur sur la périphérie de celle-ci, et des moyens de serrage aptes à déformer radialement ladite bague en matériau élastique ;
- lesdits moyens de serrage comportent un organe de serrage constitué par une plaque d'extrémité reliée à l'extrémité basse de ladite tige de selle, et des moyens à vis et à écrou sollicitant ladite plaque vers ladite bague ;
- ladite extrémité basse de ladite tige de selle est reçue avec un jeu axial dans un logement de forme complémentaire sur la face supérieure de ladite plaque ;
- ledit écrou est un écrou tubulaire coopérant avec une vis dont la tête fait saillie sur la partie supérieure de ladite tige de selle ;
- ledit écrou tubulaire est à son extrémité basse pourvu d'une bride reçue dans un logement de forme complémentaire sur la face inférieure dudit organe de serrage ;
- ladite tête de vis fait saillie dans un évidement ouvert vers l'extérieur afin de permettre le serrage de la vis après le montage de ladite tige de selle dans ledit raccord ;
- lesdits moyens de retenue comportent deux bagues d'expansion en matériau élastique et une troisième bague en matériau rigide disposée entre les deux premières.

D'autres caractéristiques et avantages de l'invention ressortiront de la description qui va suivre de deux modes de réalisation non limitatifs de l'invention, en référence aux figures annexées dans lesquelles :
- la figure 1 est une vue partielle en coupe longitudinale d'un support de tige de selle selon un premier mode de réalisation de invention ;
- la figure 2 est une vue éclatée en perspective du support de tige de selle de la figure 1;
- la figure 3 est une vue partielle d'une tige de selle et d'un raccord illustrant un exemple de moyens de blocage en rotation de la tige de selle; et
- la figure 4 est une vue en coupe transversale d'une tige de selle illustrant un autre exemple de moyens de blocage en rotation de la tige de selle par une forme non circulaire ;
- la figure 5 est une vue en perspective illustrant une variante du premier mode de réalisation de l'invention, ces éléments étant montrés légèrement séparés pour faciliter la compréhension de cette variante ;
- la figure 6 est une vue éclatée en perspective d'une tige de selle faisant partie d'un support de tige de selle selon un deuxième mode de réalisation de invention ;
- la figure 7 est une vue en coupe longitudinale de la tige de selle de la figure 6, après assemblage des moyens formant expandeur sur la tige; et
- la figure 8 est une vue en coupe longitudinale de la tige de selle de la figure 7, après son insertion dans un raccord.

Dans les figures, les éléments identiques ou équivalents porteront les mêmes signes de référence.

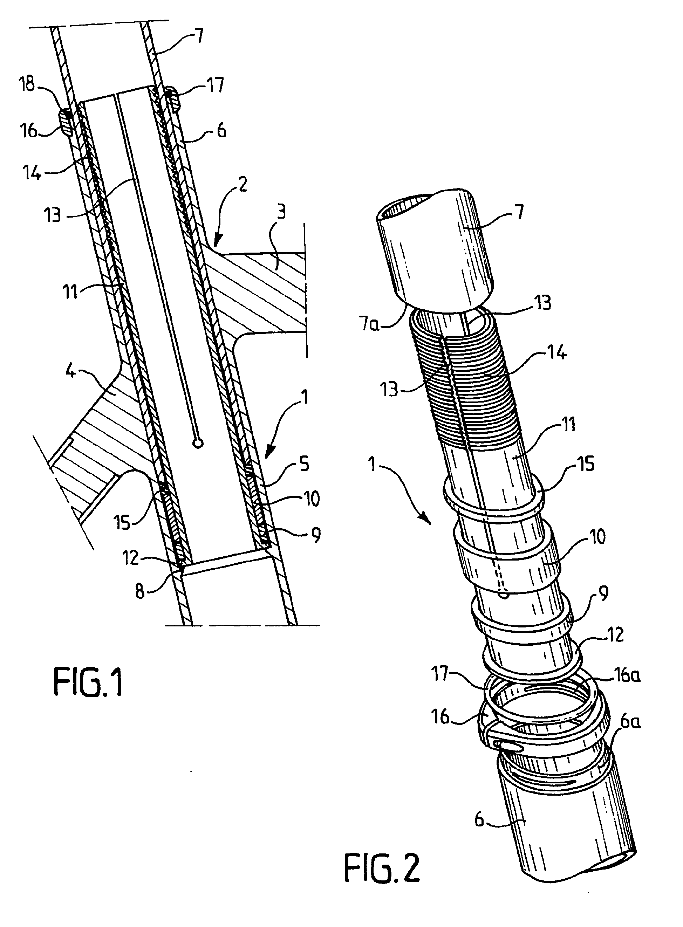

Les figures 1 et 2 sont des vues partielles montrant la partie d'un cadre de cycle dans laquelle un dispositif de support de tige de selle 1 selon un premier mode de réalisation de l'invention est intégré. Cette partie du cadre de cycle peut être désigné comme un noeud de raccordement de selle 2 dans lequel se joignent un tube supérieur 3, des haubans dont l'un (4) est visible sur la figure 1, ainsi qu'un tube de selle 5.

La partie haute du tube de selle 5 comporte un raccord de tige de selle tubulaire 6. Le raccord de tige de selle 6 est dans l'exemple illustré constitué par l'extrémité haute du tube de selle 5 qui est dimensionnée pour recevoir une tige de selle 7.

Les moyens de maintien de la tige de selle 7 dans une position longitudinale déterminée par rapport au raccord tubulaire 6 comportent une butée 8 (voir figure 1).

Dans le premier mode de réalisation, la butée 8 est disposée sur la paroi intérieure du raccord. Cette butée 8 est disposée de manière à délimiter la longueur d'insertion de la tige de selle 7 dans le raccord 6 en coopérant avec une surface de butée 7a qui dans ce premier mode de réalisation est constituée par la face d'extrémité basse de la tige de selle 7. La butée 8 arrête et maintient ainsi la tige de selle à une position longitudinale déterminée.

La butée 8 est de préférence définie par un épaulement annulaire s'étendant sur toute la périphérie intérieure du raccord 6. Dans l'exemple illustré aux figures 1 et 2, le raccord 6 ainsi que la tige de selle sont cylindriques et, par conséquent, l'épaulement 8 est dans ce cas circulaire.

Dans la mise en oeuvre la plus simple du dispositif de support, la surface de l'extrémité basse 7a de la tige de selle 7 repose directement sur l'épaulement 8, mais dans ce cas, la seule possibilité pour régler la hauteur de la selle par rapport à l'axe du pédalier (non représenté) consiste à utiliser des longueurs de tiges de selle différentes ou bien à couper la tige de selle à la longueur souhaitée.

Cependant, une telle solution n'est pas très pratique et pour cette raison, une caractéristique essentielle de l'invention consiste à prévoir une entretoise 9 à l'intérieur du raccord de tige de selle 6, entre la surface de butée 7a formée par l'extrémité basse de la tige de selle 7, et la butée 8.

Cette entretoise 9 maintient l'écartement entre ces deux éléments et modifie par conséquent la longueur d'insertion de la tige de selle 7 dans le raccord 6. Elle permet ainsi de régler la hauteur de la selle à la position choisie par le cycliste.

L'entretoise 9 peut être obtenue en une seule pièce en coupant une ébauche d'entretoise afin d'obtenir la longueur souhaitée. Cependant, cette solution relativement simple n'autorise plus par la suite de régler la position de la selle à une hauteur supérieure.

Pour cette raison et pour obtenir une progressivité maximale se rapprochant le plus possible du réglage continu classique de la position longitudinale d'une tige de selle, il est en outre proposé de prévoir plusieurs entretoises 9, 10 de longueurs différentes. Ces entretoises sont avantageusement fournies avec la tige de selle sous forme d'un jeu et elles sont ensuite judicieusement choisies par le cycliste pour donner en combinaison un empilage de longueur voulue, ou à défaut très proche de celle-ci.

La forme périphérique des entretoises 9, 10 est dans l'exemple illustré circulaire, mais ces entretoises peuvent bien entendu présenter une forme périphérique non circulaire. Cependant, cette forme doit toujours être adaptée à la forme de la paroi intérieure du raccord 6.

Il est souhaitable que l'utilisateur puisse effectuer le réglage de la hauteur de la selle et donc l'installation ou la modification de l'empilage d'entretoises de la façon la plus commode. Cependant, ces éléments se trouvent à l'intérieur du tube de selle 5 et sont donc peu accessibles.

Pour faciliter la manipulation des entretoises, le dispositif de support comporte avantageusement, comme cela est illustré sur les figures 1 et 2, un moyen auxiliaire de liaison permettant de faire ressortir les entretoises, que la tige de selle 7 soit présente dans le raccord 6 ou absente de celui-ci.

Ce moyen auxiliaire est constitué par une douille 11 dont l'une des extrémités, dite l'extrémité haute, est dimensionnée pour être introduite dans la tige de selle 7 et dont l'autre extrémité, dite l'extrémité basse, est pourvue d'une collerette 12 dimensionnée pour être introduite dans le raccord 6. La face inférieure de la collerette repose ainsi sur la butée 8, alors que sa surface supérieure constitue une surface d'appui pour l'entretoise 9 qui est annulaire pour être enfilée sur la douille 11, alors que dans l'exemple illustré, une deuxième entretoise 10, également annulaire, est disposée contre l'entretoise 9.

La surface de butée 7a formée par l'extrémité basse de la tige de selle 7 coopère dans ce cas avec la butée 8 par l'intermédiaire de la collerette 12 et des entretoises 9 et 10.

La longueur de cette douille 11 peut correspondre à la longueur souhaitée pour le réglage, augmentée de la longueur minimale d'insertion de la tige de selle 7 à l'intérieur du cadre qui est d'environ 60 mm.

Il est ainsi possible de préparer l'empilage des entretoises 9, 10 à l'extérieur du raccord 6 directement sur la douille 11 qui ensuite est introduite dans le raccord, suite à quoi la tige de selle 7 est introduite dans le raccord, entre celui-ci et la douille dans l'espace annulaire défini entre ces deux éléments, pour venir reposer contre l'entretoise 10.

La douille 11 comporte avantageusement plusieurs fentes longitudinales 13 s'étendant vers le bas à partir de son extrémité haute de manière à apporter une certaine flexibilité transversale à la partie haute de la douille afin de faciliter l'introduction de celle-ci à l'intérieur de la tige de selle 7.

De préférence, la douille 11 présente alors à sa partie haute une dimension extérieure légèrement supérieure à la dimension intérieure de la tige de selle de sorte que la douille soit retenue par friction à l'intérieur de celle-ci. Afin d'améliorer la friction, la douille comporte en outre sur sa périphérie extérieure une série de rainures annulaires 14.

On obtient ainsi un ensemble préassemblé séparément à l'extérieur du raccord 6 et facile à monter dans celui-ci.

Lors d'un remplacement éventuel d'une entretoise de réglage 9, 10, l'extraction de l'empilement d'entretoises 9, 10 se fait à l'aide de la douille tubulaire fendue 11. En effet, la douille 11 reste serrée, grâce aux fentes d'élasticité 13, à l'intérieur de la tige de selle 7 et il suffit donc d'extraire celle-ci pour sortir tout l'ensemble préassemblé avec toutes les pièces se trouvant à l'intérieur du raccord 6.

Le dispositif de support 1 comporte avantageusement en outre un anneau élastique 15 disposé directement en dessous de l'extrémité basse de la tige de selle 7, entre celle-ci et la butée 8. Dans l'exemple illustré, les entretoises 9, 10 sont en plus intercalées entre ces éléments.

Cet anneau élastique 15 fait fonction d'amortisseur. Il peut avoir une section globalement rectangulaire, mais afin d'assurer également le maintien latéral de la tige de selle 7 en supprimant le jeu à l'intérieur du raccord 6, il présente avantageusement une face supérieure conique se rétrécissant vers le bas et apte à coopérer par complémentarité des formes avec la surface inférieure de l'extrémité basse de la tige de selle 7 qui alors est également conique.

Afin d'obtenir un effet amortissant pour amortir les trépidations et vibrations lors du pédalage, il est, au lieu d'utiliser l'anneau 15, envisageable d'effectuer les entretoises 9, 10 en un matériau élastique et/ou également la douille 11 elle-même en un matériau élastique. Dans cette variante, les fentes 13 de la douille 11 peuvent être supprimées, même si la douille présente à sa partie haute une dimension extérieure légèrement supérieure à la dimension intérieure de la tige de selle de sorte que la douille soit retenue par friction à l'intérieur de celle-ci.

Afin d'assurer l'étanchéité du raccord 6, celui-ci est dans le mode de réalisation illustré sur les figures 1 et 2 à son extrémité haute pourvu d'un collier de serrage 16 associé à un joint d'étanchéité 17 disposé dans une gorge 18 dans la face intérieure de celui-ci. Le collier de serrage est monté sur l'extrémité du raccord 6 par une liaison d'encliquetage par nervures 16a, 6a.

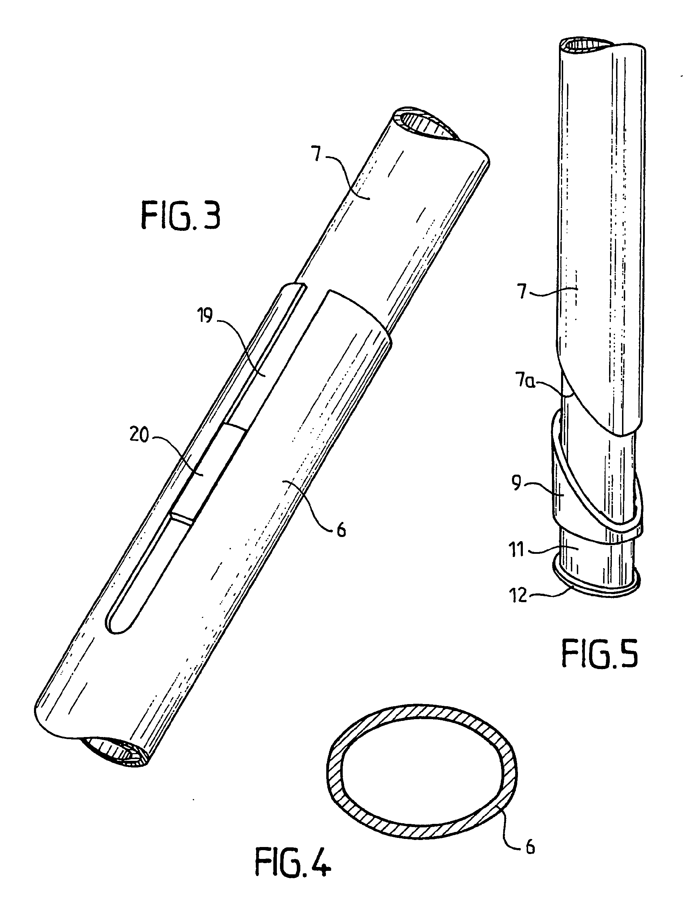

En ce qui concerne les moyens de blocage en rotation de la tige de selle 7 à l'intérieur du raccord 6, la figure 3 illustre un exemple de tels moyens de blocage en rotation dans le cas de formes circulaires de la tige de selle 7 et du raccord 6. Dans cet exemple, le raccord est à son extrémité haute pourvu d'une fente 19 débouchant vers le haut et constituant une fente de guidage d'une clavette 20 fixée sur la face extérieure du tube de selle 7.

Il existe en outre plusieurs solutions en fonction des formes des sections de la tige de selle et du raccord et, le cas échéant, de la douille 11. Les sections peuvent par exemple présenter une forme sensiblement ovale comme cela est illustré à la figure 4 à l'exemple de cette coupe transversale d'un raccord 6. Les sections peuvent bien entendu présenter une forme quelconque non circulaire comme par exemple une forme carrée, rectangulaire, hexagonale etc.

La figure 5 montre que la douille 11, la collerette 12 de celle-ci, l'entretoise 9 et la tige de selle présentent une section sensiblement ovale pour être adaptée à la forme du raccord 6 de la figure 4.

La figure 5 montre en outre que l'extrémité basse de la tige de selle 7 est en variante biseautée afin de venir en appui sur la surface supérieure de l'entretoise 9 biseautée de manière complémentaire. De préférence, l'entretoise est ici en matériau élastique pour l'obtention d'un rattrapage automatique et efficace du jeu à l'intérieur du raccord de tige de selle lors de l'utilisation.

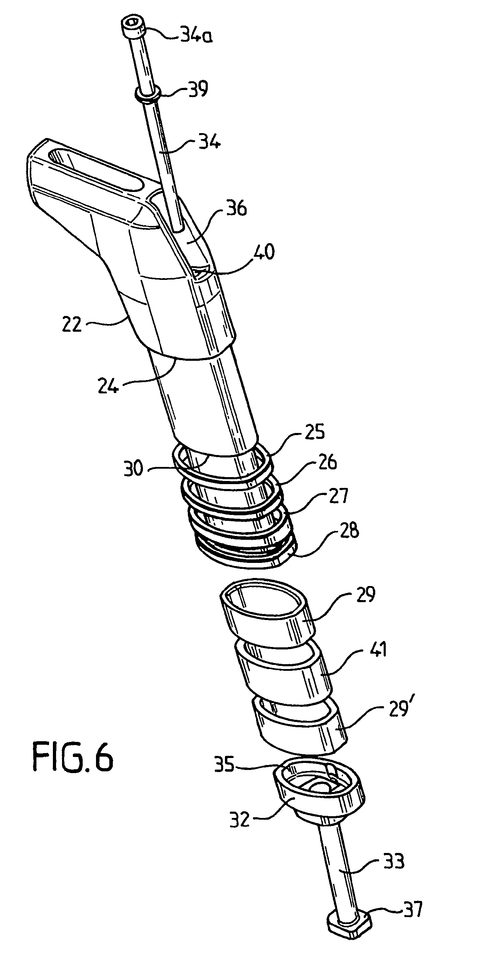

Les figures 6 à 8 illustrent un deuxième mode de réalisation d'un dispositif de support de tige de selle 22 selon l'invention.

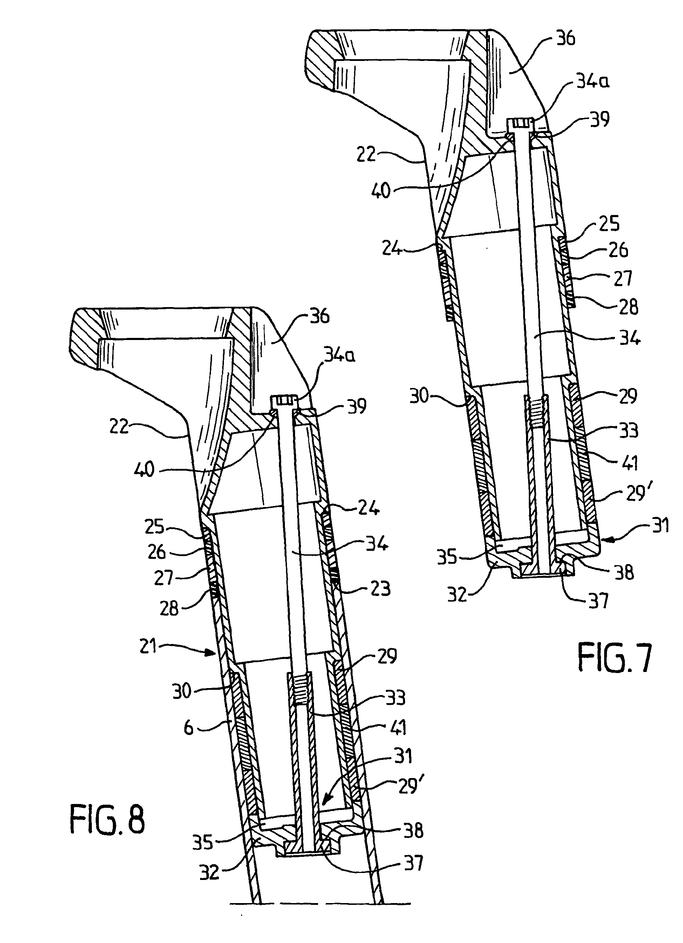

Comme dans le premier mode de réalisation, ce dispositif de support 21 comprend un raccord tubulaire 6 (voir figure 8) constitué par l'extrémité haute d'un tube de selle. Le dispositif de support est apte à recevoir une tige de selle 22 et comprend des moyens de blocage en rotation de celle-ci. Ces moyens de blocage peuvent avantageusement, comme déjà mentionné, être constitués par la forme non circulaire de la tige de selle 22 et du raccord de tige de selle 6 dont la paroi intérieure présente une forme complémentaire à celle de la tige de selle.

Le dispositif de support de tige de selle 22 comporte également des moyens de maintien de la tige de selle 22 dans une position longitudinale déterminée par rapport au raccord de tige de selle 6. Selon ce deuxième mode de réalisation, les moyens de maintien de la tige comporte une butée constituée par la face d'extrémité 23 du raccord 6 apte à coopérer avec une surface de butée sur la tige de selle 22. Cette surface de butée est constituée par un épaulement supérieur annulaire 24 prévu sur la périphérie de la tige de selle.

Selon une caractéristique essentielle de l'invention, les moyens de maintien comportent en outre au moins une entretoise annulaire apte à être disposée entre la surface de butée 24 et la butée 23 de manière à permettre le réglage de la longueur d'insertion de la tige de selle 22 dans le raccord 6. Dans l'exemple illustré, plusieurs entretoises 25, 26 et 27 à longueurs différentes sont utilisées afin d'obtenir plus de flexibilité lors du réglage de la longueur d'insertion de la tige de selle. Les entretoises 25, 26 et 27 sont disposées les unes contres les autres de manière à former un empilage.

Le dispositif de support 21 comporte avantageusement en outre un anneau élastique 28 qui ici prend la forme d'un joint annulaire disposé directement en dessous de l'entretoise 27 la plus basse de manière à faire fonction d'amortisseur en atténuant les trépidations et vibrations induites en utilisation par les irrégularités de la chaussée et transmises vers la tige de selle.

Afin d'obtenir un effet amortissant pour amortir les trépidations et vibrations lors du pédalage, il est, au lieu d'utiliser l'anneau 28, envisageable d'effectuer les entretoises 25 à 27 en un matériau élastique.

Cependant, l'anneau élastique 28 peut apporter un avantage supplémentaire en servant de moyen auxiliaire de liaison en retenant la ou les entretoises 25 à 27 sur la tige de selle 22 pour former un ensemble préassemblé avant le montage de la tige de selle sur le raccord 6. Dans ce cas, la section intérieure du joint pourra être légèrement inférieure à celle de la tige de selle 22, de façon à obtenir une déformation élastique lors de l'assemblage.

Ce moyen auxiliaire de liaison pourrait également être constitué par des nervures (non représentées) prévues sur l'une ou l'autre des interfaces entre ladite au moins une entretoise et ladite tige de selle, et plus précisément sur la face interne de la ou les entretoises 25 à 27 ou bien sur la tige de selle 22 de manière à apporter une certaine friction entre ces éléments.

Le dispositif de support de tige de selle selon ce deuxième mode de réalisation comporte en outre avantageusement des moyens de retenue de la tige de selle 22 à l'intérieur du raccord 6 à la place des dispositifs de serrage classiques tels que les colliers. Les moyens de retenue doivent d'une manière générale assurer la retenue de la tige de selle dans le raccord pour le cas où le cycliste soulève le vélo en le prenant par la selle. La désolidarisation soudaine de la tige est en effet susceptible de provoquer un accident ou au moins une détérioration du matériel. Ainsi, l'effort minimum de retenue ne doit pas être inférieur à 400 Newtons.

Les moyens de retenue selon invention sont intégrés dans la tige de selle 6 et sont aptes à assurer la retenue nécessaire sans générer d'efforts trop importants dans l'intérieur du raccord, ainsi que sur la tige de selle 22 elle-même. Cela est particulièrement important pour les éléments de cadre de compétition dont les parois sont relativement minces.

Les moyens de retenue selon invention comportent une bague d'expansion 29 en un matériau élastique tel qu'un élastomère, cette bague étant enfilée sur la tige de selle 22 en appui contre un épaulement annulaire inférieur 30 sur la périphérie de la tige de selle.

La bague d'expansion est associée à des moyens de serrage 31 comportant un organe de serrage constitué par une plaque d'extrémité 32 reliée à l'extrémité basse de la tige de selle 22. Ils comportent en outre des moyens à écrou 33 et à vis 34 qui sollicitent la plaque 32 vers la bague d'expansion 29 de manière à la déformer radialement.

La bague d'expansion 29 remplit ainsi deux fonctions, d'une part pour retenir la tige de selle 22 dans le raccord 6, et d'autre part pour rattraper le jeu radial qui peut exister entre la paroi extérieure de la tige de selle et la paroi intérieure du raccord. On élimine ainsi un effet de flottement très désagréable et même gênant pour le cycliste qui est dû à un jeu radial trop grand.

L'extrémité basse de la tige de selle 22 est reçue avec un jeu axial dans un logement 35 de forme complémentaire prévu sur la face supérieure de la plaque d'extrémité 32 afin d'effectuer un mouvement axial relatif par rapport à celle-ci lors du serrage à l'aide de la vis 34 dont la tête 34a fait saillie sur la partie supérieure de la tige de selle 22, plus précisément dans un évidement 36 ouvert vers l'extérieur sur le côté dirigé vers l'avant de la tige de selle.

L'écrou 33 traverse la plaque d'extrémité 32 et est à son extrémité basse pourvu d'une bride 37 reçue dans un logement 38 de forme complémentaire sur la face inférieure de la plaque d'extrémité 32. Cette forme est avantageusement carrée afin de servir de blocage en rotation de l'écrou 33 lors du serrage de la vis 34.

Du fait que la vis 34 se trouve légèrement inclinée à l'intérieur de la tige de selle 22, la vis peut avantageusement être pourvue d'une rondelle 39 à face inférieure galbée ou sphérique pour être reçue dans un creux 40 de forme complémentaire dans le fond de l'évidement 36 à la partie supérieure de la tige de selle 22.

Finalement, les moyens de retenue peuvent comprendre, comme cela est illustré sur les figures 6 à 8, deux bagues d'expansion 29 et 29' en un matériau élastique tel qu'un élastomère, et une troisième bague 41 en un matériau rigide disposée entre les deux premières.

Par ailleurs, les surfaces périphériques des entretoises 25 à 27 et de la tige de selle 22 au-dessus de l'épaulement 24 sont, lorsque la tige de selle est insérée dans le raccord 6, avantageusement alignées sur la surface périphérique de celui-ci de manière à former une continuité sans les parties proéminentes présentes sur les dispositifs de serrage classiques. On obtient ainsi une tige de selle qui constitue un prolongement naturel du raccord de selle.

## Revendications

1. Dispositif de support de tige de selle, comprenant un raccord tubulaire (6) faisant partie d'un cadre de cycle et apte à recevoir une tige de selle (7; 22), des moyens de blocage en rotation (19, 20) de ladite tige de selle (7), et des moyens de maintien (7a, 8; 23, 24) de ladite tige de selle (7; 22) dans une position longitudinale déterminée par rapport audit raccord tubulaire (6), lesdits moyens de maintien comportant une surface de butée (7a 24) prévue sur ladite tige de selle (7; 22) et apte à coopérer avec une butée (8; 23) prévue sur ledit raccord (6) de manière à délimiter la longueur d'insertion de la tige de selle (7; 22) dans celui-ci, **caractérisé par le fait que** lesdits moyens de maintien (7a, 8; 23, 24) comportent en outre au moins une entretoise annulaire (9, 10; 25 à 27) apte à être disposée entre ladite surface de butée (7a; 24) et ladite butée (8; 23) de manière à permettre le réglage de ladite longueur d'insertion.

2. Dispositif de support selon la revendication 1, **caractérisé par le fait que** plusieurs entretoises (9, 10; 25 à 27) sont disposées les unes contre les autres de manière à former un empilage.

3. Dispositif de support selon la revendication 2, **caractérisé par le fait que** la longueur des entretoises (9, 10; 25 à 27) varie d'une entretoise à une autre.

4. Dispositif de support selon l'une quelconque des revendications 1 à 3, **caractérisé par le fait que** ladite au moins une entretoise (9, 10; 25 à 27) est en un matériau élastique.

5. Dispositif de support selon l'une quelconque des revendications précédentes, **caractérisé par le fait que** ladite tige de selle (7; 22) comporte un moyen auxiliaire de liaison (11, 12; 28) permettant de relier ladite au moins une entretoise (9, 10; 25 à 27) à ladite tige de selle (7; 22) pour former un ensemble préassemblé avant le montage de la tige de selle sur ledit raccord (6).

6. Dispositif de support selon l'une quelconque des revendications précédentes, **caractérisé par le fait que** ladite butée (8) est formée par un épaulement sur la paroi intérieure dudit raccord (6), que ladite surface de butée (7a) est constituée par la face d'extrémité de ladite tige de selle (7), et que ladite au moins une entretoise annulaire (9, 10) est disposée à l'intérieur dudit raccord (6), entre ledit épaulement (7a) et ladite face d'extrémité dudit raccord.

7. Dispositif de support selon la revendication 6, **caractérisé par le fait que** ledit moyen auxiliaire de liaison comporte une douille (11) dont l'une des extrémités est dimensionnée pour être introduite dans la tige de selle (7) et dont l'autre extrémité est pourvue d'une collerette (12) dimensionnée pour être introduite dans ledit raccord (6) de sorte que sa face inférieure repose sur ladite butée (8), alors que sa face supérieure constitue une surface d'appui pour une entretoise (9, 10) enfilée sur ladite douille (11).

8. Dispositif de support selon la revendication 7, **caractérisé par le fait que** ladite douille (11) comporte plusieurs fentes longitudinales (13) s'étendant vers le bas à partir de son extrémité haute de manière à apporter une certaine flexibilité transversale à cette extrémité haute.

9. Dispositif de support selon les revendications 7 ou 8, **caractérisé par le fait que** ladite douille (11) présente à sa partie haute une dimension extérieure légèrement supérieure à la dimension intérieure de la tige (7) de selle de sorte que la douille (11) soit retenue par friction à l'intérieur de celle-ci.

10. Dispositif de support selon la revendication 9, **caractérisé par le fait que** ladite partie haute de la douille (11) comporte sur sa périphérie extérieure une série de rainures annulaires (14).

11. Dispositif de support selon l'une quelconque des revendications 6 à 10, **caractérisé par le fait que** ladite douille (11) est en un matériau élastique.

12. Dispositif de support selon l'une quelconque des revendications 1 à 3 et 5 à 11, **caractérisé par le fait qu'**en outre un anneau (15) en matériau élastique est inséré entre ladite butée (8) et l'extrémité basse de la tige de selle (7).

13. Dispositif de support selon la revendication 12, **caractérisé par le fait que** la face supérieure dudit anneau (15) est conique pour coopérer par complémentarité des formes avec une surface inférieure conique de l'extrémité basse de la tige de selle (7).

14. Dispositif de support selon l'une quelconque des revendications précédentes, **caractérisé par le fait que** l'extrémité basse de la tige de selle (7) est biseautée afin de venir en appui sur la surface supérieure d'une entretoise (9, 10) biseautée de manière complémentaire.

15. Dispositif de support selon l'une quelconque des revendications 1 à 5, **caractérisé par le fait que** ladite butée (23) est constituée par la face d'extrémité dudit raccord (6), que ladite surface de butée est formée par un épaulement supérieur annulaire (24) sur la périphérie de ladite tige de selle (22), et que ladite au moins une entretoise annulaire (25 à 27) est enfilée sur ladite tige de selle, en dessous dudit épaulement supérieur (24).

16. Dispositif de support selon la revendication 15, **caractérisé par le fait que** ledit moyen auxiliaire de liaison de ladite au moins une entretoise (25 à 27) à ladite tige de selle (22) comporte des nervures prévues sur l'une ou l'autre des interfaces entre ladite au moins une entretoise (25 à 27) et ladite tige de selle (22).

17. Dispositif de support selon la revendication 15, **caractérisé par le fait que** ledit moyen auxiliaire de liaison de ladite au moins une entretoise (25 à 27) à ladite tige de selle (22) comporte un anneau (28) en matériau élastique enfilé sur ladite tige de selle en dessous de ladite entretoise (25 à 27) de manière à retenir celle-ci en place sur ladite tige de selle (22).

18. Dispositif de support selon l'une quelconque des revendications 15 à 17, **caractérisé par le fait que** les surfaces périphériques dudit raccord (6), de ladite au moins une entretoise (25 à 27), et de ladite tige de selle (22) au-dessus dudit épaulement (24), sont alignées lorsque cette dernière est insérée dans ledit raccord (6).

19. Dispositif de support selon l'une quelconque des revendications 15 à 18, **caractérisé par le fait qu'**il comporte en outre des moyens de retenue (29 à 34) de ladite tige de selle (22) à l'intérieur dudit raccord (6), ces moyens de retenue étant intégrés dans ladite tige de selle (22).

20. Dispositif de support selon la revendication 19, **caractérisé par le fait que** lesdits moyens de retenue comportent une bague d'expansion (29, 29') en un matériau élastique enfilée sur ladite tige de selle (22) en appui contre un épaulement annulaire inférieur (30) sur la périphérie de celle-ci, et des moyens de serrage (31) aptes à déformer radialement ladite bague en matériau élastique (29, 29').

21. Dispositif de support selon la revendication 20, **caractérisé par le fait que** lesdits moyens de serrage (31) comportent un organe de serrage (32) constitué par une plaque d'extrémité reliée à l'extrémité basse de ladite tige de selle (22), et des moyens à vis (34) et à écrou (33) sollicitant ladite plaque vers ladite bague (29, 29').

22. Dispositif de support selon la revendication 21, **caractérisé par le fait que** ladite extrémité basse de ladite tige de selle (22) est reçue avec un jeu axial dans un logement (35) de forme complémentaire sur la face supérieure de ladite plaque (32).

23. Dispositif de support selon la revendication 21 ou 22, **caractérisé par le fait que** ledit écrou (33) est un écrou tubulaire coopérant avec une vis (34) dont la tête (34a) fait saillie sur la partie supérieure de ladite tige de selle (22).

24. Dispositif de support selon la revendication 23, **caractérisé par le fait que** ledit écrou tubulaire (33) est à son extrémité basse pourvu d'une bride (37) reçue dans un logement (38) de forme complémentaire sur la face inférieure dudit organe de serrage (32).

25. Dispositif de support selon la revendication 23 ou 24, **caractérisé par le fait que** ladite tête de vis (34a) fait saillie dans un évidement (36) ouvert vers l'extérieur afin de permettre le serrage de la vis (34) après le montage de ladite tige de selle (22) dans ledit raccord (6).

26. Dispositif de support selon l'une quelconque des revendications 19 à 25, **caractérisé par le fait que** lesdits moyens de retenue comportent deux bagues d'expansion (29, 29') en matériau élastique et une troisième bague (41) en matériau rigide disposée entre les deux premières.

## Claims

1. Saddle post support device, comprising a tubular fitting (6) that is part of a bicycle frame and able to accommodate a saddle post (7; 22), means (19, 20) for locking said saddle post (7) in rotation, and means (7a, 8; 23, 24) for holding said saddle post (7; 22) in a longitudinal position that is determined relative to said tubular fitting (6), whereby said holding means comprises a stop surface (7a; 24) that is provided on said saddle post (7; 22) and able to cooperate with a stop (8; 23) that is provided on said fitting (6) so as to delimit the insertion length of the saddle post (7; 22) in the latter, **characterised by** the fact that said holding means (7a, 8; 23, 24) also comprises at least one annular spacer (9, 10; 25 to 27) that can be arranged between said stop surface (7a; 24) and said stop (8; 23) so as to allow the adjustment of said insertion length.

2. Support device according to claim 1, **characterised by** the fact that several spacers (9, 10; 25 to 27) are arranged against one another so as to form a stack.

3. Support device according to claim 2, **characterised by** the fact that the length of the spacers (9, 10; 25 to 27) varies from one spacer to the next.

4. Support device according to any one of claims 1 to 3, **characterised by** the fact that said at least one spacer (9, 10: 25 to 27) is made from an elastic material.

5. Support device according to any one of the preceding claims, **characterised by** the fact that said saddle post (7; 22) comprises an auxiliary connecting means (11, 12; 28) that makes it possible to connect said at least one spacer (9, 10; 25 to 27) to said saddle post (7; 22) to form a preassembled unit before mounting the saddle post onto said fitting (6).

6. Support device according to any one of the preceding claims, **characterised by** the fact that said stop (8) is formed by a shoulder on the inside wall of said fitting (6), in that said stop surface (7a) consists of the end face of said saddle post (7), and in that said at least one annular spacer (9, 10) is arranged inside said fitting (6), between said shoulder (7a) and said end face of said fitting.

7. Support device according to claim 6, **characterised by** the fact that said auxiliary connecting means comprises a sleeve (11), one end of which is of such a size so as to be introduced into the saddle post (7) and the other end of which is provided with a collar (12) of such as size so as to be introduced into said fitting (6), such that its lower face rests on said stop (8), whereas its upper face constitutes a bearing surface for a spacer (9, 10) that is threaded onto said sleeve (11).

8. Support device according to claim 7, **characterised by** the fact that said sleeve (11) comprises several longitudinal slots (13) which extend towards the bottom from its top end so as to provide a certain transverse flexibility to said top end.

9. Support device according to claim 7 or 8, **characterised by** the fact that at its top part said sleeve (11) has an external dimension that is slightly greater than the internal dimension of the saddle post (7) such that the sleeve (11) is held by friction inside the latter.

10. Support device according to claim 9, **characterised by** the fact that said top part of the sleeve (11) comprises a series of annular grooves (14) on its external periphery.

11. Support device according to any one of claims 6 to 10, **characterised by** the fact that said sleeve (11) is made from an elastic material.

12. Support device according to any one of claims 1 to 3 and 5 to 11, **characterised by** the fact that furthermore a ring (15) made from an elastic material is inserted between the said stop (8) and the bottom end of the saddle post (7).

13. Support device according to claim 12, **characterised by** the fact that the upper face of said ring (15) is conical so as to cooperate by having a complementary shape with a conical lower surface of the bottom end of the saddle post (7).

14. Support device according to any one of the preceding claims, **characterised by** the fact that the bottom end of the saddle post (7) is bevelled so as to bear against the upper surface of a bevelled spacer (9, 10) in a complementary manner.

15. Support device according to any one of claims 1 to 5, **characterised by** the fact that said stop (23) is formed by the end face of said fitting (6), in that the said stop surface is formed by an annular upper shoulder (24) on the periphery of said saddle post (22), and in that said at least one annular spacer (25 to 27) is threaded onto the said saddle post, below said upper shoulder (24).

16. Support device according to claim 15, **characterised by** the fact that said auxiliary connecting means of said at least one spacer (25 to 27) to said saddle post (22) comprises ribs that are provided on one or other of the interfaces between said at least one spacer (25 to 27) and said saddle post (22).

17. Support device according to claim 15, **characterised by** the fact that said auxiliary connecting means of said at least one spacer (25 to 27) to said saddle post (22) comprises a ring (28) that is made of elastic material threaded onto said saddle post below said spacer (25 to 27) so as to hold the latter in place on said saddle post (22).

18. Support device according to any one of claims 15 to 17, **characterised by** the fact that the peripheral surfaces of said fitting (6), of said at least one spacer (25 to 27) and of said saddle post (22) above said shoulder (24) are aligned when the latter is inserted into said fitting (6).

19. Support device according to any one of claims 15 to 18, **characterised by** the fact that it also comprises means (29 to 34) for holding said saddle post (22) inside said fitting (6), whereby said holding means are integrated into said saddle post (22).

20. Support device according to claim 19, **characterised by** the fact that said holding means comprise an expansion ring (29, 29') made from an elastic material threaded onto said saddle post (22) which rests against a lower annular shoulder (30) on the periphery of the latter, and tightening means (31) that can radially deform said ring (29, 29') made of elastic material.

21. Support device according to claim 20, **characterised by** the fact that said tightening means (31) comprises a tightening element (32) consisting of an end plate that is connected to the bottom end of said saddle post (22), and screw means (34) and nut means (33) that push said plate toward said ring (29, 29').

22. Support device according to claim 21, **characterised by** the fact that said bottom end of said saddle post (22) is received with axial play in a housing (35) of complementary shape on the upper face of said plate (32).

23. Support device according to claim 21 or 22, **characterised by** the fact that said nut (33) is a tubular nut which cooperates with a screw (34) whose head (34a) projects above the upper part of said saddle post (22).

24. Support device according to claim 23, **characterised by** the fact that at its bottom end said tubular nut (33) is provided with a flange (37) that is received in a housing (38) of complementary shape on the lower face of said tightening element (32).

25. Support device according to claim 23 or 24, **characterised by** the fact that said screw head (34a) projects into a recess (36) that is open towards the outside so as to allow the tightening of the screw (34) after mounting said saddle post (22) in said fitting (6).

26. Support device according to any one of claims 19 to 25, **characterised by** the fact that said holding means comprises two expansion rings (29, 29') made from an elastic material and a third ring (41) that is made from a rigid material arranged between the former two.

## Patentansprüche

1. Trägervorrichtung für Sattelstangen, bestehend aus einem rohrförmigen Verbindungsstück (6), das Teil eines Fahrradrahmens ist und eine Sattelstange (7; 22) aufnehmen kann, aus Mitteln zum Blockieren gegen Drehen (19, 20) dieser Sattelstange (7) sowie aus Mitteln zum Halten (7a, 8; 23, 24) dieser Sattelstange (7; 22) in einer bestimmten Längsposition zu dem genannten rohrförmigen Verbindungsstück (6), wobei diese Haltemittel eine Anschlagfläche (7a; 24) umfassen, die an der Sattelstange (7; 22) vorgesehen ist und geeignet ist, mit einem Anschlag (8; 23) zusammenzuwirken, der an dem Verbindungsstück (6) vorgesehen ist, so dass die Einstecktiefe der Sattelstange (7; 22) in dieses begrenzt ist,
**dadurch gekennzeichnet,**
**dass** diese Haltemittel (7a, 8; 23, 24) ferner mindestens ein ringförmiges Abstandsstück (9, 10; 25 bis 27) umfasst, das zwischen dieser Anschlagfläche (7a; 24) und dem Anschlag (8; 23) angeordnet werden kann, so dass **dadurch** die genannte Einstecktiefe eingestellt werden kann.

2. Trägervorrichtung nach Anspruch 1,
**dadurch gekennzeichnet,**
**dass** mehrere Abstandsstücke (9, 10; 25 bis 27) aneinander angeordnet sind, so dass sie einen Stapel bilden.

3. Trägervorrichtung nach Anspruch 2,
**dadurch gekennzeichnet,**
**dass** die Länge der Abstandsstücke (9, 10; 25 bis 27) von einem Abstandsstück zum anderen variiert.

4. Trägervorrichtung nach einem der Ansprüche 1 bis 3,
**dadurch gekennzeichnet,**
**dass** dieses mindestens ein ringförmiges Abstandsstück (9, 10; 25 bis 27) aus einem elastischen Werkstoff besteht.

5. Trägervorrichtung nach einem der vorherigen Ansprüche,
**dadurch gekennzeichnet,**
**dass** die Sattelstange (7; 22) ein zusätzliches Verbindungsmittel (11, 12; 28) aufweist, das es ermöglicht, das mindestens ein ringförmiges Abstandsstück (9, 10; 25 bis 27) mit der Sattelstange (7; 22) zu verbinden, um eine Gesamtanordnung zu bilden, die vor der Montage der Sattelstange an dem Verbindungsstück (6) vorab zusammengebaut ist.

6. Trägervorrichtung nach einem der vorherigen Ansprüche,
**dadurch gekennzeichnet,**
**dass** der Anschlag (8) durch einen Absatz an der Innenwand des Verbindungsstücks (6) gebildet wird, dass die Anschlagfläche (7a) von der Endseite der Sattelstange (7) gebildet wird und dass das mindestens ein ringförmiges Abstandsstück (9, 10) im Inneren des Verbindungsstücks (6) zwischen dieser Endseite (7a) der Sattelstange und dem Absatz (8) dieses Verbindungsstücks angeordnet ist.

7. Trägervorrichtung nach Anspruch 6,
**dadurch gekennzeichnet,**
**dass** das genannte zusätzliche Verbindungsmittel aus einer Hülse (11) besteht, deren eines Ende so bemessen ist, dass es in die Sattelstange (7) eingeführt werden kann, und deren anderes Ende mit einem umgebogenen Rand (12) versehen ist, der so bemessen ist, dass er in das Verbindungsstück (6) eingeführt werden kann, so dass seine Unterseite auf dem Anschlag (8) ruht, während seine Oberseite eine Auflagefläche für ein ringförmiges Abstandsstück (9, 10) bildet, das auf diese Hülse (11) aufgeschoben wird.

8. Trägervornchtung nach Anspruch 7,
**dadurch gekennzeichnet,**
**dass** diese Hülse (11) mehrere Längsschlitze (13) aufweist, die sich von ihrem oberen Ende aus dergestalt nach unten erstrecken, dass sie diesem oberen Ende eine gewisse Flexibilität in Querrichtung verleihen.

9. Trägervorrichtung nach einem der Ansprüche 7 oder 8,
**dadurch gekennzeichnet,**
**dass** diese Hülse (11) in ihrem oberen Teil eine Außenabmessung aufweist, die etwas größer ist als die Innenabmessung der Sattelstange (7), so dass die Hülse (11) durch Reibung in deren Inneren festgehalten wird.

10. Trägervornchtung nach Anspruch 9,
**dadurch gekennzeichnet,**
**dass** dieser obere Teil der Hülse (11) an seinem Außenumfang eine Reihe von ringförmigen Rillen (14) aufweist.

11. Trägervorrichtung nach einem der Ansprüche 6 bis 10,
**dadurch gekennzeichnet,**
**dass** diese Hülse (11) aus einem elastischen Werkstoff besteht.

12. Trägervornchtung nach einem der Ansprüche 1 bis 3 und 5 bis 11,
**dadurch gekennzeichnet,**
**dass** ferner ein Ring (15) aus elastischem Werkstoff zwischen dem Anschlag (8) und dem unteren Ende der Sattelstange (7) eingesetzt ist.

13. Trägervorrichtung nach Anspruch 12,
**dadurch gekennzeichnet,**
**dass** die obere Seite dieses Rings (15) konisch geformt ist, um in Formpassung mit einer konischen unteren Fläche des unteren Endes der Sattelstange (7) zusammenzuwirken.

14. Trägervorrichtung nach einem der vorherigen Ansprüche,
**dadurch gekennzeichnet,**
**dass** das untere Ende der Sattelstange (7) abgeschrägt ist, um in Anlage an der oberen Fläche eines komplementär abgeschrägten Abstandsstücks (9, 10) zu kommen.

15. Trägervorrichtung nach einem der Ansprüche 1 bis 5,
**dadurch gekennzeichnet,**
**dass** der Anschlag (23) von der Endseite des Verbindungsstücks (6) gebildet wird, dass die genannte Anschlagfläche von einem ringförmigen, oberen Absatz (24) an der Außenumfangslinie der Sattelstange (22) gebildet wird, und dass das mindestens ein ringförmiges Abstandsstück (25 bis 27) auf die genannte Sattelstange unterhalb dieses oberen Absatzes (24) aufgesteckt ist.

16. Trägervorrichtung nach Anspruch 15,
**dadurch gekennzeichnet,**
**dass** das genannte zusätzliche Verbindungsmittel zur Verbindung des mindestens einen Abstandsstücks (25 bis 27) mit der Sattelstange (22) Rippen aufweist, die an der einen oder der anderen Grenzfläche zwischen diesem mindestens einen Abstandsstück (25 bis 27) und der Sattelstange (22) vorgesehen sind.

17. Trägervornchtung nach Anspruch 15,
**dadurch gekennzeichnet,**
**dass** das genannte zusätzliche Verbindungsmittel zur Verbindung des mindestens einen Abstandsstücks (25 bis 27) mit der Sattelstange (22) einen Ring (28) aus elastischem Werkstoff umfasst, der auf dieser Sattelstange unterhalb dieses Abstandsstücks (25 bis 27) sitzt, so dass er dieses auf seinem Platz auf dieser Sattelstange (22) festhält.

18. Trägervornchtung nach einem der Ansprüche 15 bis 17,
**dadurch gekennzeichnet,**
**dass** die Umfangsflächen des Verbindungsstücks (6), des mindestens einen Abstandsstücks (25 bis 27) und der Sattelstange (22) unterhalb des Absatzes (24) miteinander in einer Linie liegen, wenn letztere in das Verbindungsstück (6) eingesetzt ist.

19. Trägervorrichtung nach einem der Ansprüche 15 bis 18,
**dadurch gekennzeichnet,**
**dass** sie ferner Haltemittel (29 bis 34) zum Halten der Sattelstange (22) im Inneren des Verbindungsstücks (6) aufweist, wobei diese Haltemittel in dieser Sattelstange (22) integriert sind.

20. Trägervorrichtung nach Anspruch 19,
**dadurch gekennzeichnet,**
**dass** diese Haltemittel einen Expansionsring (29, 29') aus einem elastischen Werkstoff umfassen, der auf der Sattelstange (22) sitzt und sich in Anlage an einem unteren, ringförmigen Absatz (30) an deren Umfangslinie befindet, sowie Klemmmittel (31) umfassen, die geeignet sind, diesen Ring aus elastischem Werkstoff (29, 29') radial zu verformen.

21. Trägervorrichtung nach Anspruch 20,
**dadurch gekennzeichnet,**
**dass** diese Klemmmittel (31) ein Klemmorgan (32) beinhalten, das von einer Endplatte gebildet wird, die mit dem unteren Ende der Sattelstange (22) verbunden ist, sowie Mittel mit Schrauben (34) und Muttern (33), die diese Platte in Richtung des Rings (29, 29') belasten.

22. Trägervorrichtung nach Anspruch 21,
**dadurch gekennzeichnet,**
**dass** das genannte untere Ende der Sattelstange (22) mit einem axialen Spiel in einer komplementär geformten Aufnahme (35) an der oberen Seite dieser Platte (32) aufgenommen wird.

23. Trägervornchtung nach Anspruch 21 oder 22,
**dadurch gekennzeichnet,**
**dass** diese Mutter (33) eine rohrförmige Mutter ist, die mit einer Schraube (34) zusammenwirkt, deren Kopf (34a) über den oberen Teil der Sattelstange (22) hinausragt.

24. Trägervorrichtung nach Anspruch 23,
**dadurch gekennzeichnet,**
**dass** diese rohrförmige Mutter (33) an ihrem unteren Ende mit einem Flansch (37) versehen ist, der in einer Aufnahme (38) mit komplementärer Form an der unteren Seite des Klemmorgans (32) aufgenommen wird.

25. Trägervorrichtung nach Anspruch 23 oder 24,
**dadurch gekennzeichnet,**
**dass** dieser Schraubenkopf (34a) in eine Aussparung (36) hineinragt, die nach außen offen ist, um das Festklemmen der Schraube (34) nach der Montage der Sattelstange (22) in dem Verbindungsstück (6) zu ermöglichen.

26. Trägervorrichtung nach einem der Ansprüche 19 bis 25,
**dadurch gekennzeichnet,**
**dass** die genannten Haltemittel zwei Expansionsringe (29, 29') aus elastischem Werkstoff und einen zwischen diesen beiden ersten ringen angeordneten dritten Ring (41) aus starrem Werkstoff umfassen.
